# EUROPÄISCHE PATENTSCHRIFT

(11) **EP 3 179 325 B1**
(45) Veröffentlichungstag und Bekanntmachung des Hinweises auf die Patenterteilung: **25.09.2019**
(21) Anmeldenummer: 16200673.8
(22) Anmeldetag: 25.11.2016
(51) Int. Cl.: G05B 19/4097, G05B 19/02, B23P 21/00, B23Q 15/00, G06Q 10/06, G06Q 10/08, G06Q 50/04

(54) **BEARBEITUNGSPLATZ**
WORKPLACE
POSTE D'USINAGE

(30) Priorität: 03.12.2015 DE 202015106588 U
(43) Veröffentlichungstag der Anmeldung: 14.06.2017
(73) Patentinhaber: HOMAG GmbH, 72296 Schopfloch (DE)
(72) Erfinder: Graf, Joachim, 72189 Vöhringen (DE); Friebolin, Manuel, 75365 Calw-Sth. (DE)
(74) Vertreter: Hoffmann Eitle

(56) Entgegenhaltungen:
- DE-A1- 10 221 032
- DE-A1-102005 005 266
- US-A1- 2002 051 008

## Beschreibung

### Gebiet der Erfindung

Die vorliegende Erfindung betrifft einen Bearbeitungsplatz, an dem an einem Bauteil manuelle und/oder halbautomatische Bearbeitungsvorgänge durch einen Anwender ausführbar sind, wobei die Bauteile insbesondere Möbelstücke oder Teilstücke von Möbelstücken sind, und der Bearbeitungsplatz insbesondere zur Anleitung und Unterstützung des Anwenders bei der Bearbeitung des Bauteils geeignet ist.

### Stand der Technik

Selbst bei hochautomatisierten Fertigungsanlagen sind in vielen Bereichen immer noch manuelle oder halbautomatische Bearbeitungsplätze in Verwendung, an denen einzelne Bauteile manuell bzw. halbautomatisch zu bearbeiten und insbesondere aus einzelnen Bauelementen zusammen zu setzen sind. Dies ist insbesondere auch im Bereich der Fertigung hochwertiger Möbelstücke der Fall, wo der Bedarf nach immer stärker individualisierten Lösungen einer vollständig maschinellen Fertigung Grenzen setzt und manuelle oder halbautomatische Bearbeitungsplätze für Bearbeitungsvorgänge immer noch das Mittel der Wahl sind.

Die immer weiter fortschreitende Individualisierung sowie das Bestreben, die manuellen bzw. halbautomatischen Bearbeitungsvorgänge in "just-in-time" Abläufe einzubinden, verlangen dem Anwender andererseits immer komplexere Fähigkeiten ab. Dieser muss sich immer wieder an neue, teils sehr komplexe Montagevorgänge gewöhnen, die noch dazu von Baueinheit zu Baueinheit wechseln können. Gerade unter Zeitdruck führt dies häufig zu einer Überforderung des Anwenders und somit zu Ausschuss.

Um den Anwender in dieser Hinsicht zu unterstützen, stellt bspw. die DE 10 2013 220 107 A1 eine Vorrichtung bereit, bei welcher der Anwender bspw. mittels eines Monitors oder einer Projektionseinrichtung an einem Montagearbeitsplatz angeleitet werden kann. Ferner ist ein Kamerasystem vorgesehen, welches Montagevorgänge durch den Anwender überwacht. In der Praxis können dem Anwender dann einzelne Bearbeitungsvorgänge Schritt für Schritt angezeigt werden.

Zum "Einlernen" der Vorrichtung ist dabei vorgesehen, die zum Aufbau des Bauteils durchzuführenden Bearbeitungsvorgänge in einem "musterhaften" Arbeitsvorgang von einem bereits kundigen Anwender ausführen zu lassen und mit dem Kamerasystem zu erfassen.

Ein ähnlicher Ansatz wird in der DE 103 20 557 B4 verfolgt. Auch hier kommen ein kamerabasiertes Kontrollsystem sowie eine Projektionseinrichtung zum Einsatz.

Die DE 102 21 032 A1 offenbart eine Vorrichtung zur computerunterstützten Montage von Werkstücken, die aufweist: eine zentrale Datenbank, in der produktspezifische Daten und Steuerungsbefehle für Werkzeuge in einem geräteunspezifischen Format abgelegt sind, mindestens einen Arbeitsplatzrechner und/oder Werkzeugrechner, mittels dessen ein Werkzeug ansteuerbar und Ist-Werte des Werkstücks bzw. des Werkzeuges erfassbar sind, mindestens einen Bildschirm zur Darstellung der für den Montagevorgang benötigten produktspezifischen Daten, mindestens ein Werkzeug zur Durchführung von Montageschritten und eine Erkennungseinrichtung oder Eingabeeinrichtung zur Identifizierung eines Werkstückes, wobei die Daten der Erkennungseinrichtung an die zentrale Datenbank übertragbar sind, wo die das Werkstück und/oder den Montagevorgang betreffenden Daten zusammengestellt und zusammen mit zugeordneten geräteunspezifischen Steuerungsbefehlen an den Arbeitsplatzrechner und/oder den Werkzeugrechner übertragbar sind, die Ist-Daten des Werkzeuges bzw. Werkstückes erfassbar und an die zentrale oder eine andere Datenbank übertragbar und abspeicherbar sind, wobei die geräteunspezifischen Steuerungsbefehle der zentralen Datenbank im Arbeitsplatz- und/oder Werkzeugrechner, im Werkzeug oder in einem Montagerechner in gerätespezifische Steuerungsbefehle für das angeschlossene Werkzeug umsetzbar sind.

Eine weitere Schrift, die US 2002/051008 A1, zeigt ein Videoanzeigesystem.

Die DE 10 2005 005 266 A1 betrifft ein Verfahren zum automatisierten Erzeugen und Anzeigen von Arbeitsanweisungen für die Montage eines aus einer Vielzahl von Teilen bestehenden Erzeugnisses. Das Verfahren umfasst folgende Schritte: Erzeugen der Arbeitsschritte zum Montieren des Erzeugnisses, Auslesen der Konstruktionsdaten der zur Herstellung des Erzeugnisses erforderlichen Teile aus einem Konstruktionsdaten-Speicher und automatisches Erzeugen von Daten für die visuelle Darstellung der Teile aus den Konstruktionsdaten, automatisches Verknüpfen der an den jeweiligen Arbeitsschritten beteiligten Teile zu einer visuellen Darstellung der Arbeitsanweisungen und Ausgeben der visuellen Darstellungen der Arbeitsanweisungen durch eine Ausgabeeinheit. Ferner betrifft dieses Dokument eine entsprechende Vorrichtung, mit der dieses Verfahren durchgeführt werden kann.

### Darstellung der Erfindung

Gerade bei komplexen und in rascher Folge wechselnden Bearbeitungsvorgängen sind der obigen Vorrichtung allerdings Grenzen gesetzt. So ist es sehr aufwendig, die Vorrichtungen auf ein neues Bauteil und die damit verbundenen Bearbeitungsvorgänge einzulernen, um dem Anwender anschließend die entsprechenden Bearbeitungsinformationen (etwa in Form von Montageanweisungen) bereitzustellen. Das Abfilmen der Tätigkeiten eines bereits kundigen Anwenders ist darüber hinaus sehr zeitaufwendig und bedarf in der Regel mehrerer Versuche, bis ein modellhafter Arbeitsablauf aufgenommen ist. Bei einer hochgradig individualisierten Fertigung mit vielen wechselnden Baueinheiten, wie etwa im Bereich des Möbelbaus, ist dies sehr schnell nicht mehr praktikabel.

Ferner führt das oben beschriebene "Einlernen" der Bearbeitungsplätze eine subjektive Komponente in die Fertigung ein, wodurch der Ausschuss bei der Fertigung steigen kann.

Angesichts der oben beschriebenen Probleme, ist es eine Aufgabe der vorliegenden Erfindung, einen Bearbeitungsplatz zur Unterstützung eines Anwenders bei der Bearbeitung von Bauteilen bereitzustellen, der effizienter in bestehende Fertigungsabläufe integrierbar ist und mit dem der Ausschuss reduziert werden kann.

Ein Grundgedanke der Erfindung ist es, zur Lösung des Problems auf CAD-Daten des fertigen Bauteils zurückzugreifen, das am am Bearbeitungsplatz zu montieren bzw. zu bearbeiten ist, Bauteils und die entsprechenden Bearbeitungsinformationen (bzw. Montageanweisungen) für den Anwender auf Grundlage dieser CAD-Daten zu generieren (bzw. zu berechnen).

Insbesondere wird die oben beschriebene Aufgabe durch einen Bearbeitungsplatz gemäß Anspruch 1 gelöst. Weitere bevorzugte Ausgestaltungen sind in den zugehörigen abhängigen Ansprüchen definiert.

Folglich weist ein Bearbeitungsplatz, an dem manuelle und/oder halbautomatische Bearbeitungsvorgänge an einem Bauteil durch einen Anwender ausführbar sind, eine Steuereinrichtung, eine mit der Steuereinrichtung verbundene Anzeigeeinrichtung, sowie ein oder mehrere Werkzeuge und/oder mehrere Magazine für einzelne Bauelemente zur Bearbeitung des Bauteils auf. Die Anzeigeeinrichtung ist derart eingerichtet, dass sie dem Anwender Bearbeitungsinformationen vermittelt, welche Bearbeitungsinformationen die manuellen und/oder halbautomatischen Bearbeitungsvorgänge betreffen. Die Steuereinrichtung ist derart ausgelegt, dass sie die Bearbeitungsinformationen aus CAD-Daten des Bauteils (d.h. insbesondere CAD-Daten des "fertigen" Bauteils nach der Bearbeitung am Bearbeitungsplatz) generiert und diese Bearbeitungsinformationen in die Anzeigeeinrichtung eingibt, wobei die Bearbeitungsinformationen Informationen hinsichtlich der zu verwendenden Werkzeuge und/oder Magazine umfassen, die Anzeigeeinrichtung geeignet ist, die Werkzeuge und/oder Magazine und/oder Bauteile auf Grundlage der Bearbeitungsinformationen kenntlich zu machen und optisch zu markieren.

Dieses Kenntlichmachen oder Markieren kann bspw. durch die vorgenannten LEDs oder unter Zuhilfenahme einer Projektionseinrichtung erfolgen.

Durch die Unterstützung des Anwenders hinsichtlich der Auswahl der Bauelemente bzw. der Werkzeuge werden Montagefehler weiter eingeschränkt und der Ausschuss bei der manuellen bzw. halbautomatischen Fertigung der Bauteile wird reduziert.

Das Bauteil kann dabei entweder ein Werkstück, ein Bauteil oder eine Baugruppe aus mehreren Bauelementen sein. "Verbunden" kann sich auch auf eine drahtlose Verbindung beziehen.

Insbesondere betreffen die Bearbeitungsinformationen auf den Aufbau eines Bauteils gerichtete, manuelle und/oder halbautomatische Montagevorgänge durch einen Anwender (Montageinformationen). Sie können aber auch Bearbeitungsanweisungen wie das setzen eines Bohrlochs umfassen.

Ein Bearbeitungsplatz im Sinne der vorliegenden Erfindung kann in einem Beispiel eine Werkbank bzw. einen Arbeitstisch betreffen. Allerdings umfasst der Begriff Bearbeitungsplatz auch im Allgemeinen einen Bereich, in dem sich ein Anwender bestimmten Bearbeitungs- und/oder Montagetätigkeiten zuwendet.

Somit kann ein Bearbeitungsplatz auch mehrere Positionen innerhalb eines Bereichs meinen, die von einem Anwender einbezogen werden (zwischen denen sich der Anwender bewegt), insbesondere wenn bspw. die Anzeigeeinrichtung als mobile Anzeigevorrichtung vorgesehen ist.

Halbautomatische Bearbeitungsvorgänge sind rein beispielhaft solche Bearbeitungsvorgänge, bei denen Tätigkeiten, die ein Anwender durchführen soll, durch mechanische Einrichtungen wie einem Roboterarm, eine Druck- oder Lackiereinrichtung, usw. unterstützt werden.

Der Rückgriff auf die CAD-Daten des auszubildenden Bauteils stellt eine effiziente und objektive Art und Weise dar, die zugehörigen Bearbeitungsinformationen zu generieren. Der subjektive und zeitaufwendige Vorgang des Einlernens der Vorrichtung mit Hilfe der modellhaften Ausführung der Bearbeitungsvorgänge durch einen kundigen Anwender entfällt.

Damit ist der Bearbeitungsplatz besonders zur Anleitung von Anwendern in der Praxis bei häufig wechselnden Baueinheiten, d.h. wechselnden Bauteilen, sowie komplexen Bearbeitungs- oder Montagevorgängen, geeignet. Ferner können Anwendungsfehler minimiert und die Prozesssicherheit gesteigert werden, was wiederum den Ausschuss reduziert und eine Qualitätssicherung manuell oder halbautomatisch produzierter Produkte ermöglicht. Darüber hinaus können Fertigungsabläufe (Workflows) optimiert werden, da gleichzeitig eine Synchronisation der Bearbeitungsvorgänge mit den bereitgehaltenen Bauelementen für das Bauteil möglich ist. Ferner erlaubt dies die flexible Taktung des Aufbaus verschiedener Bauteile. Darüber hinaus können beim Generieren der Bearbeitungsinformationen aus den CAD-Daten Gesichtspunkte hinsichtlich ergonomischen Arbeitens einfach berücksichtigt werden.

Letztlich werden die Bearbeitungsvorgänge auch dahingehend erleichtert, dass ein geringeres Fachwissen von Nöten ist und bspw. leistungsgeminderte Arbeitskräfte besser unterstützt werden können.

Die Anzeigeeinrichtung kann dabei bezüglich des Bearbeitungsplatzes mobil und hierbei insbesondere vom Anwender tragbar ausgeführt sein (beispielsweise in Form eines Tablet-PCs oder einer Datenbrille). Das Vermitteln der Bearbeitungsinformationen erfolgt dann direkt "am Anwender". Alternativ kann die Anzeigeeinrichtung auch in den Bearbeitungsplatz integriert ausgeführt sein.

Die genannten CAD-Daten können 2D-Daten oder 3D-Daten sein.

Gemäß einer bevorzugten Ausführungsform kann der Bearbeitungsplatz ferner eine mit der Steuereinrichtung verbundene optische Erfassungseinrichtung aufweisen, wobei die optische Erfassungseinrichtung derart eingerichtet ist, dass sie das in Bearbeitung befindliche Bauteil und/oder die vom Anwender durchgeführten Bearbeitungsvorgänge optisch erfassen kann und der Steuereinrichtung entsprechende Erfassungsergebnisse bereitstellt. Die Steuereinrichtung ist derart ausgelegt, dass sie die Bearbeitungsinformationen auf Grundlage der Erfassungsergebnisse korrigiert.

Dies ermöglicht mit anderen Worten eine Kontrolle bzw. Regelung der durch den Anwender durchgeführten Bearbeitungsvorgänge. So kann bspw. bei einem falschen Bearbeitungsvorgang eine Adaption der Bearbeitungsinformationen dahingehend erfolgen, dass der Anwender eine Warnung verbunden mit der Aufforderung zum Rückbau vermittelt bekommt. Dies kann beispielsweise akustisch und/oder optisch sowie über taktile Reize (Vibration) erfolgen. Somit kann die Prozesssicherheit weiter erhöht werden und der Ausschuss durch Montagefehler kann reduziert werden.

Die optische Erfassungseinrichtung kann dabei ebenso wie die Anzeigeeinrichtung bezüglich des Bearbeitungsplatzes mobil oder in den Bearbeitungsplatz integriert ausgeführt sein.

Gemäß einer bevorzugten Ausführungsform weist der Bearbeitungsplatz ferner zumindest eine Arbeitsfläche auf, auf der das auszubildende Bauteil zu bearbeiten ist, wobei die optische Erfassungsvorrichtung oberhalb der Arbeitsfläche angeordnet ist.

Die Anordnung der optischen Erfassungseinrichtung oberhalb der Arbeitsfläche begünstigt, dass alle relevanten Bearbeitungsvorgänge optimal erfasst werden können, was wiederum die Genauigkeit der Erfassungsergebnisse erhöht und somit Anwendungsfehler und damit den Ausschuss minimiert.

Gemäß einer bevorzugten Ausführungsform ist die optische Erfassungseinrichtung ferner ein Kamerasystem.

Die Erzeugung der optischen Erfassungsergebnisse mit Hilfe einer oder mehrerer Kameras stellt dabei ein effektives Verfahren dar, insbesondere die vom Anwender vorgenommenen Bearbeitungsvorgänge (also insbesondere die Bewegungen des Anwenders) zu erfassen und gegebenenfalls durch eine Adaption der Bearbeitungsinformationen regulierend zu korrigieren. Insbesondere kann durch Verwendung von kamerabasierten Systemen ein digitaler Bildabgleich zwischen dem in Bearbeitung befindlichen Bauteil und den hinterlegten CAD-Daten erfolgen. Ob ein korrigierendes Eingreifen im Rahmen adaptierter bzw. korrigierter Bearbeitungsinformationen notwendig ist, kann daher einfach festgestellt werden.

Bevorzugt sind zumindest Teile der Anzeigeeinrichtung (nach einigen Ausführungsformen auch die gesamte optische Anzeigeeinrichtung) mit der optischen Erfassungseinrichtung integriert. Weiter bevorzugt sind die mit der optischen Erfassungseinrichtung integrierten Teile der Anzeigeeinrichtung optische Anzeigeelemente.

Integriert kann in diesem Fall bspw. bedeuten, dass beide Einrichtungen in einem Gehäuse aufgenommen sind. Dies kann beispielweise auch heißen, dass beide Einrichtungen in eine tragbare Vorrichtung integriert sind, welche die Bearbeitungsinformationen direkt am Anwender darstellt. Als Beispiel hierfür ist eine Datenbrille zu nennen, in die eine Kamera integriert ist.

Die Integration beider Einrichtungen hat den Vorteil, dass beide Einrichtungen die gleiche "Perspektive" aufweisen, womit Umrechnungsprozesse in der Steuereinrichtung gegebenenfalls entfallen können und der Bearbeitungsplatz effektiver arbeiten kann. Ferner kann damit der für beide Einrichtungen notwendige Bauraum verringert werden. Auch begünstigt die obige Integration die Umsetzung der Erfindung im Rahmen einer Nachrüstlösung, um einen konventionellen Bearbeitungsplatz im Sinne der vorliegenden Erfindung weiterzubilden.

Gemäß einer bevorzugten Ausführungsform weist die Anzeigeeinrichtung optische und/oder akustische und/oder taktile Anzeigeelemente auf.

Die taktilen Anzeigeeinrichtungen können dabei in Vibrationseinrichtungen bestehen, die geeignet sind, bei gewissen Handlungen des Anwenders einen taktilen Reiz durch Vibration auszulösen.

Gemäß einer bevorzugten Ausführungsform weist die Anzeigeeinrichtung eine Projektionseinrichtung auf, die geeignet ist, die Bearbeitungsinformationen auf eine Arbeitsfläche zu projizieren.

Die Projektion der Bearbeitungsinformationen direkt auf die Arbeitsfläche stellt dabei einen besonders instruktiven und damit effektiven Weg dar, dem Anwender die Bearbeitungsinformationen (bspw. die als nächstes auszuführenden Montageschritte) optisch darzustellen. Der Ausschuss kann damit weiter reduziert werden.

Dabei kann die Projektion entweder von unten im Rahmen einer Rückwandprojektion (in Kombination mit einer teilweise durchsichtigen Arbeitsfläche) oder von oben erfolgen.

Ferner kann die Anzeigeeinrichtung gemäß einer bevorzugten Ausführungsform ein oder mehrere Bildschirme sowie mehrere LEDs aufweisen.

Die Bildschirme ermöglichen bspw. die Darstellung von Bearbeitungsinformationen in Form von Animationen. Die LEDs können verwendet werden, um dem Anwender Komponenten anzuzeigen, die für entsprechende Bearbeitungsvorgänge notwendig sind (bspw. Werkzeuge oder einzelne Bauelemente).

Durch Rückgriff auf Bildschirme bzw. LEDs können Montagefehler weiter minimiert werden und die Prozesssicherheit wird weiter erhöht, da der Anwender auch hinsichtlich der Auswahl der Bauelemente bzw. der Werkzeuge sowie der für einen Bearbeitungsvorgang notwendigen Bewegungsabläufe angeleitet werden kann.

Gemäß einer bevorzugten Ausführungsform enthalten die Bearbeitungsinformationen Informationen hinsichtlich der Bearbeitungsreihenfolge und/oder der zum Aufbau des Bauteils zu verwendenden Bauelemente und/oder der Ausrichtung der zum Aufbau des Bauteils zu verwendenden Bauelemente und/oder der zur Bearbeitung des Bauteils zu verwendenden Werkzeuge und/oder der Positionierung der zum Aufbau des Bauteils zu verwendenden Bauelemente und/oder Bearbeitungsanweisungen, wie bspw. mechanische Bearbeitungsvorgänge (z.B. Fräsen, Bohren oder Schleifen) Anzugdrehmomente oder Bewegungsabläufe für Andrück- und Einrastvorgänge usw.

Durch die Bereitstellung dieser Bearbeitungsinformationen kann der Anwender beim manuellen oder halbautomatischen Bearbeiten des Bauteils noch umfassender unterstützt werden. Dies trägt zu einer weiteren Minimierung von Anwendungsfehlern bei und steigert die Prozesssicherheit weiter. Ferner wird die Qualität der manuell oder halbautomatisch produzierten Produkte weiter gesteigert, da bspw. einheitliche Standards beim Zusammenbau umgesetzt werden können.

Gemäß einem weiteren Aspekt der vorliegenden Erfindung wird der oben beschriebene Bearbeitungsplatz zur Anweisung eines Anwenders verwendet, welche Anweisung auf die Ausführung manueller oder halbautomatischer Bearbeitungsvorgänge zur Ausbildung eines Bauteils an dem Bearbeitungsplatz gerichtet ist.

Wie bereits erwähnt, sorgt eine solche Verwendung des Bearbeitungsplatzes für eine gesteigerte Prozesssicherheit, optimierte Workflows, eine Verringerung der Anwendungsfehler, eine größere Effizienz des Bearbeitungsplatzes bei komplexen Bearbeitungsvorgängen und/oder wechselnden Baueinheiten sowie eine verbesserte Qualitätssicherung der manuell bzw. halbautomatisch produzierten Produkte.

Ebenfalls Gegenstand der vorliegenden Offenbarung ist ein Verfahren zur Anweisung eines Anwenders, welche Anweisung auf die Ausführung manueller und/oder halbautomatischer Bearbeitungsvorgänge zur Ausbildung eines Bauteils an einem wie oben beschrieben ausgelegten Bearbeitungsplatz gerichtet ist. Das Verfahren umfasst das Generieren von die Bearbeitungsvorgänge betreffenden Bearbeitungsinformationen aus CAD-Daten des auszubildenden Bauteils sowie das Vermitteln der Bearbeitungsinformationen an den Anwender.

Die Erzeugung der Bearbeitungsinformationen direkt aus den CAD-Daten hat dabei den Vorteil, dass die Bearbeitungsinformationen effektiv, objektiv und reproduzierbar generiert werden können und dass hierfür alle Details der Konstruktion des Bauteils zur Verfügung stehen. Dies betrifft bspw. die grundlegenden Werkstücke, Bauteilgruppen, Abmessungen, Befestigungsmittel, Anzugdrehmomente, Kleinteile, sowie die Reihenfolge der Bearbeitungsvorgänge. Durch Umsetzen dieser Informationen in Bearbeitungsinformationen für die vom Anwender auszuführenden Bearbeitungsvorgänge kann damit der Ausschuss reduziert werden.

Gemäß einer Weiterbildung kann das Verfahren als den Schritt des Vermittelns der Bearbeitungsinformationen ferner das Projizieren der Bearbeitungsinformationen auf eine Arbeitsfläche umfassen, auf welcher Arbeitsfläche das Bauteil auszubilden ist.

Dies stellt einen besonders instruktiven Weg dar, dem Anwender die Bearbeitungsinformationen näherzubringen, was letztlich die angestrebte Prozesssicherheit sowie die Effizienz der Vorrichtung weiter erhöht.

Gemäß einer Weiterbildung kann das Verfahren ferner das optische Erfassen des in der Herstellung befindlichen Bauteils zur Erstellung optischer Erfassungsergebnisse sowie die Korrektur der Bearbeitungsinformationen auf Grundlage der optischen Erfassungsergebnisse beinhalten.

Auch hierbei ermöglicht der Rückgriff auf CAD-Daten einen einfachen Abgleich zwischen dem optischen Erfassungsergebnis und der Referenz in Form der CAD-Daten, was eine Adaption der Bearbeitungsinformationen wesentlich erleichtert.

### Kurze Beschreibung der Zeichnung

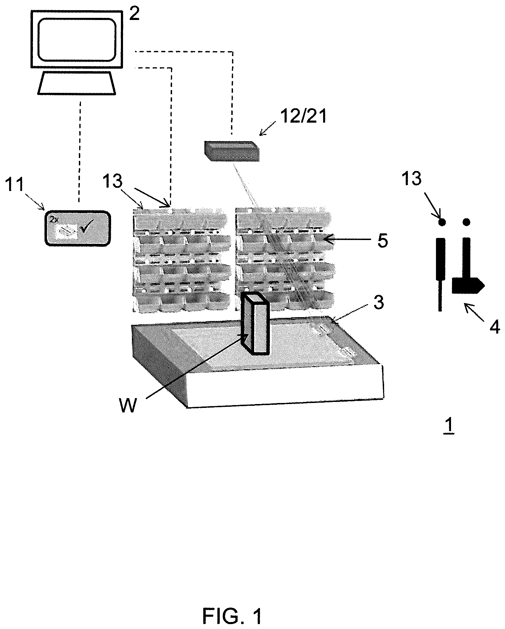

Fig. 1 zeigt eine Schemadarstellung einer Ausführungsform des Bearbeitungsplatzes.

### Ausführliche Beschreibung bevorzugter Ausführungsformen der Erfindung

Bevorzugte Ausführungsformen der Erfindung werden nachfolgend ausführlich mit Bezugnahme auf die begleitende Zeichnung beschrieben. Weitere in diesem Zusammenhang genannte Modifikationen können jeweils miteinander kombiniert werden, um neue Ausführungsformen auszubilden.

Die Figur stellt eine Schemadarstellung einer Ausführungsform eines Bearbeitungsplatzes 1 dar.

Der Bearbeitungsplatz 1 weist eine Steuereinrichtung 2 sowie eine Arbeitsfläche 3 auf, auf der ein Bauteil W auszubilden bzw. herzustellen ist. Ferner weist der Bearbeitungsplatz 1 Werkzeuge 4 bzw. entsprechende Werkzeughalter zur Aufnahme der Werkzeugen 4 auf, welche zum Ausführen von Bearbeitungsvorgängen zur Ausbildung bzw. zur Bearbeitung des Bauteils W geeignet sind. Darüber hinaus weist der Bearbeitungsplatz 1 mehrere Magazine 5 zur Aufnahme von Bauelementen für den Aufbau des Bauteils W auf. Es wird angemerkt, dass sowohl die Werkzeuge 4 als auch deren Werkzeughalter und auch die Magazine 5 lediglich optional sind.

Ferner weist der Bearbeitungsplatz 1 eine mit der Steuereinrichtung 2 verbundene Anzeigeeinrichtung 11, 12, 13 auf, welche hier beispielhaft durch einen Bildschirm 11 (bzw. durch ein Display), LEDs 13 sowie eine Projektionseinrichtung 12 gebildet ist.

Zusätzlich sind bei der Anzeigeeinrichtung aber akustische Anzeigeelemente (wie etwa Lausprecher) oder Anzeigeelemente denkbar, die einen taktilen Reiz vermitteln (etwa eine Vibrationseinrichtung).

Es wird angemerkt, dass dies lediglich der Veranschaulichung dient. Bspw. kann die Anzeigeeinrichtung auch lediglich eine dieser Komponenten und insbesondere lediglich nur die Projektionseinrichtung 12 umfassen. Die Projektionseinrichtung 12 kann bspw. ein Laserprojektor oder ein Beamer sein.

Ferner weist der Bearbeitungsplatz 1 eine mit der Steuereinrichtung 2 verbundene optische Erfassungsvorrichtung 21 auf, welche vorliegend in Form eines Kamerasystems ausgebildet ist. Wie in der Zeichnung dargestellt, sind die Projektionseinrichtung 12 und das Kamerasystem 21 in einem gemeinsamen Gehäuse integriert. Dies hat Vorteile hinsichtlich der Nachrüstung beider Einrichtungen und des erforderlichen Bauraums, ist aber nicht essentiell. Beispielsweise kann das Kamerasystem 21 auch durch mehrere geeignet in dem Bearbeitungsplatz 1 verteilte Kameras gebildet werden.

In dem gezeigten Beispiel sind die optische Erfassungseinrichtung und die Anzeigeeinrichtung in den Bearbeitungsplatz integriert (stationär).

Als Alternative ist denkbar, sowohl die optische Erfassungseinrichtung als auch die Anzeigeeinrichtung zumindest teilweise mobil auszugestalten. Als Beispiel sei hier ein Assistenzsystem in Form einer Datenbrille mit Kamera angeführt.

Die Steuereinrichtung 2 ist derart ausgelegt, dass in diese CAD-Daten des auszubildenden Bauteils W eingegeben und gespeichert werden können. Die Steuereinrichtung 2 ist ferner derart ausgelegt, dass sie auf Grundlage dieser CAD-Daten Bearbeitungsinformationen zum manuellen Aufbau des Bauteils W auf der Arbeitsfläche 3 generiert. Diese Bearbeitungsinformationen können beispielsweise die einzelnen zum Aufbau des Bauteils W notwendigen Bauelemente sowie deren Lagebeziehungen und deren Montagereihenfolge umfassen. Ferner können die Bearbeitungsinformationen Informationen hinsichtlich der Ausrichtung der zum Aufbau des Bauteils verwendeten Bauelemente sowie die zur Montage notwendigen Werkzeuge 4 umfassen. Weiterhin können die Bearbeitungsinformationen auf Montageanweisungen gerichtet sein, wie bspw. geeignete Anzugdrehmomente.

Der Rückgriff auf die CAD-Daten hat dabei den Vorteil, dass alle hierfür relevanten Informationen in einem CAD-Datensatz bereits vorhanden bzw. aus diesem berechenbar sind. Dies betrifft bspw. die einzelnen Bauelemente und deren optimale Montagereihenfolge.

Ferner kann die Steuereinrichtung 2 derart ausgelegt sein, dass beim Generieren und Bereitstellen der Bearbeitungsinformationen auch ergonomische Gesichtspunkte (bspw. hinsichtlich des Gewichts der einzelnen Bauteile) berücksichtigt werden.

Die so generierten Bearbeitungsinformationen werden von der Steuereinrichtung an die Anzeigeeinrichtung 11, 12, 13 weitergegeben. Mit anderen Worten werden die Bearbeitungsinformationen vorliegend geeignet in optische Ausgabesignale des Bildschirms 11, der LEDs 13 sowie der Projektionseinrichtung 12 übertragen. So kann bspw. auf dem Bildschirm 11 eine Animation komplexer Montagevorgänge dargestellt werden, während die LEDs 13 zum Beleuchten der einzelnen Magazine 5 bzw. der Werkzeuge 4 verwendet werden können. Mit der optischen Projektionseinrichtung 12 kann ferner ein Abbild des Montagevorgangs bzw. des im Aufbau befindlichen Bauteils direkt auf die Arbeitsfläche 3 projiziert werden.

Die optische Erfassungseinrichtung 21 dient der Kontrolle der durch den Anwender ausgeführten Montagevorgänge. Dazu ist sie derart eingerichtet, dass sie das in der Herstellung befindliche Bauteil W und/oder die vom Anwender durchgeführten Montagevorgänge optisch erfassen kann und der Steuereinrichtung 2 entsprechende Erfassungsergebnisse bereitstellt. Die optische Erfassung kann in einem Abfilmen, Abfotografieren oder Abtasten des in der Herstellung befindlichen Bauteils bestehen.

Die Steuereinrichtung ist derart ausgelegt, dass sie die Bearbeitungsinformationen auf Grundlage der Erfassungsergebnisse adaptiert. Wird eine Abweichung des in der Herstellung befindlichen Bauteils W vom Soll (d.h. den CAD-Daten) festgestellt, können die Bearbeitungsinformationen beispielsweise dahingehend adaptiert werde, dass dem Anwender eine Warnung verbunden mit der Aufforderung zum Rückbau angezeigt wird.

Durch den oben beschriebenen Bearbeitungsplatz und dessen Verwendung zum Anleiten eines Anwenders beim Aufbau eines Bauteils W und zur Kontrolle der Arbeitsergebnisse können Anwendungsfehler minimiert, die Prozesssicherheit gesteigert und Montagefehler vermieden werden. Insbesondere kann durch den direkten Rückgriff auf die CAD-Daten auf einen zeitaufwendigen und subjektive An- und Einlernprozess des Bearbeitungsplatzes verzichtet werden.

## Patentansprüche

1. Bearbeitungsplatz (1), insbesondere Montagearbeitsplatz, an dem manuelle und/oder teilautomatisierte Bearbeitungsvorgänge, insbesondere Montagevorgänge, durch einen Anwender ausführbar sind, wobei herzustellende Bauteile (W) insbesondere Möbelstücke oder Abschnitte von Möbelstücken sind und der Bearbeitungsplatz aufweist:
eine Steuereinrichtung (2);
eine mit der Steuereinrichtung (2) verbundene Anzeigeeinrichtung (11, 12, 13); und
ein oder mehrere Werkzeuge (4) und/oder mehrere Magazine (5) für einzelne Bauelemente zur Bearbeitung des Bauteils (W),
wobei die Anzeigeeinrichtung (11, 12, 13) derart eingerichtet ist, dass sie dem Anwender Bearbeitungsinformationen vermittelt, welche Bearbeitungsinformationen die manuellen und/oder halbautomatischen Bearbeitungsvorgänge betreffen;
die Steuereinrichtung (2) derart ausgelegt ist, dass sie die Bearbeitungsinformationen aus CAD-Daten des Bauteils (W) generiert und diese in die Anzeigeeinrichtung (11, 12, 13) eingibt, und
**dadurch gekennzeichnet, dass**
die Bearbeitungsinformationen Informationen hinsichtlich der zu verwendenden Werkzeuge (4) und/oder Magazine (5) umfassen, und
die Anzeigeeinrichtung (13) geeignet ist, die Werkzeuge (4) und/oder Magazine (5) und/oder Bauelemente bzw. Bauteile (W) auf Grundlage der Bearbeitungsinformationen kenntlich zu machen und optisch zu markieren.

2. Bearbeitungsplatz nach Anspruch 1, ferner mit:
einer mit der Steuereinrichtung (2) verbundenen optischen Erfassungseinrichtung (21),
wobei die optische Erfassungseinrichtung (21) derart eingerichtet ist, dass sie das in Bearbeitung befindliche Bauteil (W) und/oder die vom Anwender durchgeführten Bearbeitungsvorgänge optisch erfassen kann und der Steuereinrichtung (2) entsprechende Erfassungsergebnisse bereitstellt; und
die Steuereinrichtung (2) derart ausgelegt ist, dass sie die Bearbeitungsinformationen auf Grundlage der Erfassungsergebnisse korrigiert.

3. Bearbeitungsplatz (1) nach Anspruch 2, ferner mit:
zumindest einer Arbeitsfläche (3), auf der das Bauteil (W) zu bearbeiten ist, wobei
die optische Erfassungseinrichtung (21) oberhalb der Arbeitsfläche angeordnet ist.

4. Bearbeitungsplatz nach Anspruch 2 oder 3, bei dem die optische Erfassungsvorrichtung (21) ein Kamerasystem ist.

5. Bearbeitungsplatz nach einem der vorhergehenden Ansprüche, bei dem die Anzeigeeinrichtung optische und/oder akustische und/oder taktile Anzeigeelemente aufweist.

6. Bearbeitungsplatz (1) nach einem der Ansprüche 2 bis 4, bei dem
die Anzeigeeinrichtung (12) ein optisches Anzeigeelement aufweist, das zumindest teilweise mit der optischen Erfassungseinrichtung (21) integriert ist.

7. Bearbeitungsplatz (1) nach einem der vorhergehenden Ansprüche, ferner mit:
zumindest einer Arbeitsfläche (3), auf der das Bauteil (W) zu bearbeiten ist,
wobei die Anzeigeeinrichtung eine Projektionseinrichtung (13) aufweist, die geeignet ist, die Bearbeitungsinformationen auf die Arbeitsfläche (3) zu projizieren.

8. Bearbeitungsplatz (1) nach einem der vorhergehenden Ansprüche, bei dem
die Bearbeitungsinformationen Informationen hinsichtlich der Bearbeitungsreihenfolge und/oder der zum Aufbau des Bauteils (W) zu verwendenden Bauelemente und/oder der Ausrichtung der zum Aufbau des Bauteils zu verwendenden Bauelemente und/oder der zur Bearbeitung des Bauteils (W) zu verwendenden Werkzeuge (4) und/oder der Positionierung der zum Aufbau des Bauteils zu verwendenden Bauelemente und/oder Bearbeitungsanweisungen umfassen.

9. Bearbeitungsplatz (1) nach einem der vorhergehenden Ansprüche, bei dem die Anzeigeeinrichtung LEDs (13) und/oder einen Bildschirm (11) und/oder einen Lautsprecher und/oder ein Vibrationselement aufweist.

10. Bearbeitungsplatz (1) nach einem der vorhergehenden Ansprüche, bei dem die Anzeigeeinrichtung eine mobile Anzeigeeinrichtung ist, insbesondere ein Tablet-PC oder eine Datenbrille, weiter bevorzugt eine Datenbrille mit integrierter Kamera.

11. Verwendung des Bearbeitungsplatzes (1) nach einem der vorhergehenden Ansprüche zur Anleitung eines Anwenders, um an dem Bearbeitungsplatz (1) an einem Bauteil (W) manuelle und/oder halbautomatische Bearbeitungsvorgänge auszuführen.

12. Verfahren zur Anweisung eines Anwenders, welche Anweisung auf die Ausführung manueller und/oder halbautomatischer Bearbeitungsvorgänge zur Ausbildung eines Bauteils gerichtet ist, an einem Bearbeitungsplatz nach einem der Ansprüche 1 bis 9, gerichtet ist, wobei das Verfahren umfasst:
- Generieren von die Bearbeitungsvorgänge betreffenden Bearbeitungsinformationen aus CAD-Daten des auszubildenden Bauteils, sowie
- Vermitteln der Bearbeitungsinformationen an den Anwender.

13. Verfahren nach Anspruch 12, wobei der Schritt des Vermittelns der Bearbeitungsinformationen ferner das Projizieren der Bearbeitungsinformationen auf eine Arbeitsfläche umfasst, auf welcher Arbeitsfläche das Bauteil auszubilden ist.

14. Verfahren nach Anspruch 12 oder 13, ferner umfassend: optisches Erfassen des in der Herstellung befindlichen Bauteils zur Erstellung optischer Erfassungsergebnisse sowie Korrigieren der Bearbeitungsinformationen auf Grundlage der optischen Erfassungsergebnisse.

## Claims

1. Working station (1), in particular assembly work station, at which manual and/or partially automated working processes, in particular assembly processes, can be carried out by a user, components (W) to be produced in particular being items of furniture or portions of items of furniture and the working station comprising:
a control device (2);
a display device (11, 12, 13) connected to the control device (2); and
one or more tools (4) and/or a plurality of magazines (5) for individual parts for working the component (W),
the display device (11, 12, 13) being configured to impart working information to the user, which working information relates to the manual and/or semi-automatic working processes;
the control device (2) being designed to generate the working information from CAD data of the component (W) and to input said information into the display device (11, 12, 13), and
**characterised in that**
the working information comprises information relating to the tools (4) and/or magazines (5) to be used, and
the display device (13) is suitable for identifying and optically marking the tools (4) and/or magazines (5) and/or parts or components (W) based on the working information.

2. Working station according to claim 1, further comprising:
an optical detection device (21) connected to the control device (2),
wherein the optical detection device (21) is configured to be able to optically detect the component (W) being worked and/or the working processes being carried out by the user and to provide the control device (2) with corresponding detection results; and
the control device (2) is designed to correct the working information based on the detection results.

3. Working station (1) according to claim 2, further comprising:
at least one work surface (3) on which the component (W) is to be worked, wherein
the optical detection device (21) is arranged above the work surface.

4. Working station according to claim 2 or 3,
wherein the optical detection device (21) is a camera system.

5. Working station according to any of the preceding claims, wherein the display device comprises optical and/or acoustic and/or tactile display elements.

6. Working station (1) according to any of claims 2 to 4, wherein
the display device (12) comprises an optical display element that is integrated at least in part with the optical detection device (21).

7. Working station (1) according to any of the preceding claims, further comprising:
at least one work surface (3) on which the component (W) is to be worked,
wherein the display device comprises a projection device (13) that is suitable for projecting the working information onto the work surface (3).

8. Working station (1) according to any of the preceding claims, wherein
the working information comprises information relating to the working sequence and/or the parts to be used for constructing the component (W) and/or the orientation of the parts to be used for constructing the component and/or the tools (4) to be used for working the component (W) and/or the positioning of the parts to be used for constructing the component and/or working instructions.

9. Working station (1) according to any of the preceding claims, wherein the display device comprises LEDs (13) and/or a screen (11) and/or a speaker and/or a vibrating element.

10. Working station (1) according to any of the preceding claims, wherein the display device is a mobile display device, in particular a tablet PC or a pair of data glasses, more preferably a pair of data glasses comprising an integrated camera.

11. Use of the working station (1) according to any of the preceding claims for instructing a user to carry out manual and/or semi-automatic working processes on a component (W) at the working station (1).

12. Method for instructing a user, which instruction is aimed at the performance of manual and/or semi-automatic working processes for producing a component, at a working station according to any of claims 1 to 9, wherein the method comprises:
- generating working information relating to the working processes from CAD data of the component to be formed, and
- imparting the working information to the user.

13. Method according to claim 12, wherein the step of imparting the working information further comprises projecting the working information onto a work surface on which the component is to be formed.

14. Method according to claim 12 or 13, further comprising:
optically detecting the component being produced in order to create optical detection results and to correct the working information based on the optical detection results.

## Revendications

1. Poste d'usinage (1), en particulier poste de montage, au niveau duquel des opérations d'usinage manuelles et/ou semi-automatisées, en particulier des opérations de montage, peuvent être réalisées par un utilisateur, dans lequel des composants (W) à fabriquer sont en particulier des meubles ou des parties de meubles, et le poste d'usinage présente :
un dispositif de commande (2) ;
un dispositif d'affichage (11, 12, 13) connecté au dispositif de commande (2) ; et
un ou plusieurs outils (4) et/ou plusieurs chargeurs (5) pour des éléments individuels pour l'usinage du composant (W),
dans lequel le dispositif d'affichage (11, 12, 13) est configuré de sorte qu'il transmet à l'utilisateur des informations d'usinage, lesquelles informations d'usinage concernent les opérations d'usinage manuelles et/ou semi-automatisées ;
le dispositif de commande (2) est conçu de sorte qu'il génère les informations d'usinage à partir de données CAO du composant (W) et saisit celles-ci dans le dispositif d'affichage (11, 12, 13), et
**caractérisé en ce que**
les informations d'usinage comprennent des informations concernant les outils (4) et/ou les chargeurs (5) à utiliser, et
le dispositif d'affichage (13) est adapté pour identifier et marquer clairement les outils (4) et/ou chargeurs (5) et/ou éléments ou composants (W) sur la base des informations d'usinage.

2. Poste d'usinage selon la revendication 1, avec en outre :
un dispositif de détection optique (21) connecté au dispositif de commande (2),
dans lequel le dispositif de détection optique (21) est configuré de sorte qu'il peut détecter le composant (W) en cours d'usinage et/ou peut détecter optiquement les opérations d'usinage effectuées par l'utilisateur, et le dispositif de commande (2) fournit des résultats de détection correspondants ; et
le dispositif de commande (2) est conçu de sorte qu'il corrige les informations d'usinage sur la base des résultats de détection.

3. Poste d'usinage (1) selon la revendication 2, avec en outre :
au moins une surface de travail (3), sur laquelle le composant (W) doit être usiné, dans lequel
le dispositif de détection optique (21) est agencé au-dessus de la surface de travail.

4. Poste d'usinage selon la revendication 2 ou 3, dans lequel le dispositif de détection optique (21) est un système de caméra.

5. Poste d'usinage selon l'une des revendications précédentes, dans lequel le dispositif d'affichage présente des éléments d'affichage optiques et/ou acoustiques et/ou tactiles.

6. Poste d'usinage (1) selon l'une des revendications 2 à 4, dans lequel
le dispositif d'affichage (12) présente un élément d'affichage optique, qui est intégré au moins partiellement au dispositif de détection optique (21).

7. Poste d'usinage (1) selon l'une des revendications précédentes, avec en outre :
au moins une surface de travail (3), sur laquelle le composant (W) doit être usiné,
dans lequel le dispositif d'affichage présente un dispositif de projection (13), qui est adapté pour projeter les informations d'usinage sur la surface de travail (3).

8. Poste d'usinage (1) selon l'une des revendications précédentes, dans lequel
les informations d'usinage comprennent des informations concernant la séquence d'usinage et/ou les éléments à utiliser pour la construction du composant (W) et/ou l'orientation des éléments à utiliser pour la construction du composant et/ou les outils (4) à utiliser pour l'usinage du composant (W) et/ou le positionnement des éléments à utiliser pour la construction du composant et/ou des instructions d'usinage.

9. Poste d'usinage (1) selon l'une des revendications précédentes, dans lequel le dispositif d'affichage présente des DEL (13) et/ou un écran (11) et/ou un haut-parleur et/ou un élément vibrant.

10. Poste d'usinage (1) selon l'une des revendications précédentes, dans lequel le dispositif d'affichage est un dispositif d'affichage mobile, en particulier une tablette numérique ou des lunettes de données, de manière plus préférée des lunettes de données avec caméra intégrée.

11. Utilisation du poste d'usinage (1) selon l'une des revendications précédentes pour guider un utilisateur afin d'effectuer des opérations d'usinage manuelles et/ou semi-automatisées sur un composant (W) au niveau du poste d'usinage (1).

12. Procédé pour communiquer une instruction à un utilisateur, laquelle instruction concerne l'exécution d'opérations d'usinage manuelles et/ou semi-automatisées pour réaliser un composant, au niveau d'un poste d'usinage selon l'une quelconque des revendications 1 à 9, dans lequel le procédé comprend les étapes consistant à :
- générer des informations d'usinage concernant les opérations d'usinage à partir de données CAO du composant à former, ainsi que
- communiquer les informations d'usinage à l'utilisateur.

13. Procédé selon la revendication 12, dans lequel l'étape consistant à communiquer les informations d'usinage comprend en outre l'étape consistant à projeter les informations d'usinage sur une surface de travail, surface de travail sur laquelle le composant doit être réalisé.

14. Procédé selon la revendication 12 ou 13, comprenant en outre :
une détection optique du composant en cours de construction pour générer des résultats de détection optique, ainsi que corriger les informations d'usinage sur la base des résultats de détection optique.
